# EUROPÄISCHE PATENTSCHRIFT

(11) **EP 0 886 134 B1**
(45) Veröffentlichungstag und Bekanntmachung des Hinweises auf die Patenterteilung: **02.01.2002**
(21) Anmeldenummer: 98113079.2
(22) Anmeldetag: 30.11.1994
(51) Int. Cl.: G01L 1/22, G01L 5/00, G01L 1/00, B65H 16/02, G01G 19/18, G01B 7/04, G01B 7/02

(54) **Rollenträger**
Reelstand
Support de bobines

(30) Priorität: 08.12.1993 DE 4341800
(43) Veröffentlichungstag der Anmeldung: 23.12.1998
(62) Teilanmeldung aus: 94118811.2
(73) Patentinhaber: Koenig & Bauer Aktiengesellschaft, 97080 Würzburg (DE)
(72) Erfinder: Röder, Klaus Walter, 97074 Würzburg (DE)

(56) Entgegenhaltungen:
- DE-A- 2 843 277
- DE-A- 4 116 029
- DE-A- 4 127 631
- GB-A- 2 119 936
- US-A- 3 724 733
- US-A- 4 335 439
- US-A- 4 691 579
- US-A- 4 699 606
- US-A- 4 817 883
- PATENT ABSTRACTS OF JAPAN vol. 017, no. 357 (P-1568), 6. Juli 1993 (1993-07-06) & JP 05 052640 A (TOPPAN PRINTING CO LTD), 2. März 1993 (1993-03-02)
- PATENT ABSTRACTS OF JAPAN vol. 017, no. 449 (M-1465), 18. August 1993 (1993-08-18) & JP 05 104488 A (MORITA YUATSUKI SEISAKUSHO:KK), 27. April 1993 (1993-04-27)
- PATENT ABSTRACTS OF JAPAN vol. 011, no. 302 (M-629), 2. Oktober 1987 (1987-10-02) & JP 62 094215 A (AMADA CO LTD), 30. April 1987 (1987-04-30)
- PATENT ABSTRACTS OF JAPAN vol. 014, no. 445 (P-1110), 25. September 1990 (1990-09-25) & JP 02 176534 A (HITACHI LTD), 9. Juli 1990 (1990-07-09)
- PATENT ABSTRACTS OF JAPAN vol. 010, no. 324 (P-512), 5. November 1986 (1986-11-05) & JP 61 130842 A (SHIMADZU CORP), 18. Juni 1986 (1986-06-18)

## Beschreibung

Die Erfindung betrifft ein Verfahren zur Bestimmung einer Länge einer Materialbahn und von immanenten Kräften einer in Tragarmen eines Rollenträgers aufgeachsten Vorratsrolle.

Durch die DE 28 43 277 C2 ist eine Schaltungsanordnung zum Feststellen der auf einer Abwickelrolle verbleibenden Materialbahn bekanntgeworden, mit welcher die fortlaufende Bahnlänge des von der Abwicketrolle abgewickelten Bahnmaterials überprüft und die noch auf der Abwickelrolle verbliebene Bahnlänge errechnet wird.

Die GB-A-21 19 936 beschreibt eine Meßwalze zur Bestimmung einer Bahnspannung. Dabei wird die auf die Lagerstellen der Meßwalze wirkende Kraft mittels Dehnungsmeßstreifen ermittelt.

Der Erfindung liegt die Aufgabe zugrunde, ein Verfahren zur Bestimmung einer Länge und von immanenten Kräften einer in einem Rollenträger befindlichen Vorratsrolle zu schaffen.

Diese Aufgabe wird erfindungsgemäß durch die Merkmale der Ansprüche 1 und 2 gelöst.

Durch die Erfindung werden insbesondere folgende Vorteile erzielt: Infolge der Möglichkeit einer ständigen in-line Gewichtsermittlung in den Tragarmen eines Rollenwechslers kann sowohl nach einer ersten Gewichtsermittlung und nachfolgendem Entfernen von auf dem Transport ggf. beschädigten Warenbahnen das Nettogewicht und somit die Bahnlänge einer Vorratsrolle ermittelt werden als auch eine auf einer Restrolle verbleibende Länge einer Warenbahn, z. B. nach Abschluß einer bestimmten Produktion. Weiterhin ist es nunmehr durch die Erfindung ohne Aufwand möglich, eine Unwucht einer zwischen den Spannkonen befindlichen Vorratsrolle zu signalisieren. Eine Unwucht kann sowohl durch falsches Einspannen zwischen den Spannkonen auftreten als auch durch eine beim Lagern oder beim Transportieren deformierte Vorratsrolle ausgelöst werden. Schließlich ist es auch möglich, mittels der Erfindung zu ermitteln, ob eine nahezu warenbahnlose Restrolle aus den zurückgezogen Konen vollständig entfernt worden ist, so daß eine neue Vorratsrolle aufgenommen werden kann.
- Fig. 1: die Vorderansicht eines Rollenwechslers in Aufachsstellung,
- Fig. 2: eine Seitenansicht nach Fig. 2, jedoch ohne Seitengestell,
- Fig. 3: eine elektrische Auswerteschaltung für eine Dehnungsmessung,
- Fig. 4: einen Tragarm nach Fig. 1 mit einer erfindungsgemäßen Einrichtung nach einem Ausführungsbeispiel.

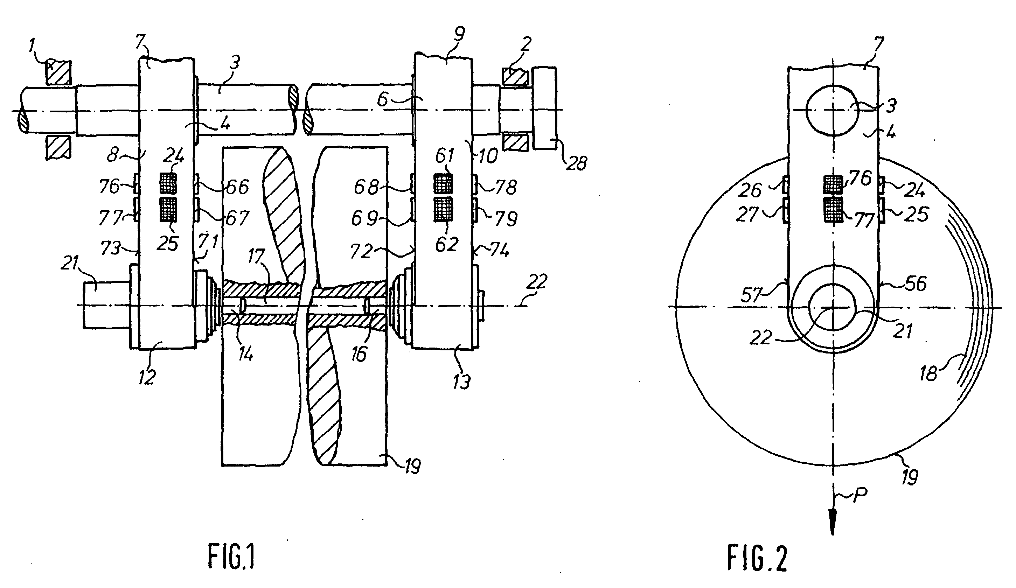

Für die Anordnung gemäß Fig. 1 und Fig. 2 sowie zugehörige Beschreibung wird kein Schutz begehrt.

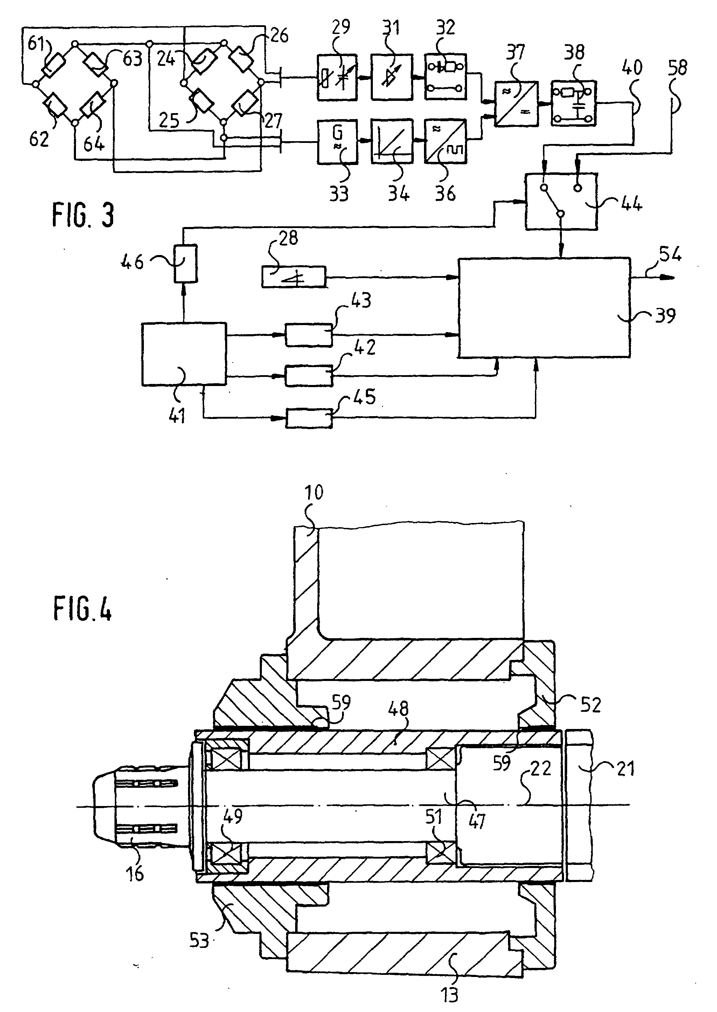

In Fig. 1 ist eine Zuführvorrichtung in Form eines Rollenwechslers in einer Vorderansicht dargestellt. Eine in angedeuteten Seitengestellen 1, 2 gelagerte, durch einen nichtdargestellten Antrieb drehbare Tragspindel 3 nimmt zwei parallel zueinander verlaufende mit der Tragspindel 3 formschlüssig verbundene Tragarmträgerteile, 4, 6 auf, die doppelarmige Hebel mit jeweils zwei Tragarmen 7, 8 und 9, 10 tragen, von denen jedoch in den Zeichnungen nur die Tragarme 8, 10 vollständig dargestellt sind. Freie Enden 12, 13 der Tragarme 8, 10 weisen in axialer Richtung aufeinander zu bewegbare Spannkonen 14, 16 auf, die jeweils stirnseitig in eine Hülse 17 eingreifen, auf welcher eine Warenbahn 18, z. B. aus Papier zu einer Vorratsrolle 19 aufgewickelt ist. Die Vorratsrolle 19 kann entweder über einen bekannten, auf ihre Mantelfläche in Umfangsrichtung wirkenden, oder einen im Zentrum der Vorratsrolle 19 angreifenden, jedoch nichtdargestellten Antrieb beschleunigt werden. Mittels einer am Ende 12 des Tragarmes 8 auf der vorratsrollenfernen Seite angeflanschten tragarmfesten Bremse 21, kann die Vorratsrolle 19 über den Spannkonus 14 und die Hülse 17 abgebremst werden. An rechten und linken Seitenflächen 56, 57 der Tragarme 8, 10, sind bekannte Dehnungsmeßstreifen 24, 25, 26, 27 sowie 61, 62, 63, 64 aufgebracht, von denen die Dehnungsmeßstreifen 63, 64 jedoch nicht in der Zeichnung dargestellt sind. Die Dehnungsmeßstreifen 24 bis 27 sowie 61 bis 64 können jeweils auf den Tragarmen 8, 10 aufgeklebt sein und befinden sich in einem tragspindelnahen Bereich der Tragarme 8, 10. Dabei sind die Dehnungsmeßstreifen 24, 25 auf einer in der Darstellung nach Fig. 2 gezeigten rechten Seitenfläche 56 des Tragarmes 8 und die Dehnungsmeßstreifen 26, 27 auf einer linken Seitenfläche 57 des Tragarmes 8 aufgebracht. In gleicher Weise sind die Dehnungsmeßstreifen 61, 62 auf einer rechten Seitenfläche 56 des Tragarmes 10 und die Dehnungsmeßstreifen 63, 64 auf einer linken Seitenfläche 57 des Tragarmes 10 aufgebracht, so daß entsprechend der Drehrichtung der Tragspindel 3 nach Fig. 2 die Dehnungsmeßstreifen 26, 27; 63, 64 in eine Drehrichtung im Uhrzeigersinn weisen und die Dehnungsmeßstreifen 24, 25; 61, 62 in eine Drehrichtung im Gegenuhrzeigersinn weisen. Somit wird in einem Bereich gemessen, in welchem sich die Materialverformung der Tragarme 8, 10 proportional zum Gewicht bzw. zur Krafteinwirkung verhält. Die Tragspindel 3 ist in der Nähe des Seitengestells 2 mit einem gestellfesten Drehwinkelgeber 28 verbunden. Die Rollenträger 4, 6 mit den daran angeordneten Tragarmen 7 bis 10 sind auf der Tragspindel 3 in axialer Richtung horizontal verschiebbar angeordnet, um Vorratsrollen 19 verschiedener Breite aufzunehmen. Die Rollenträger 4, 6 sind zusammen mit der Tragspindel 3 verdrehbar, so daß die Tragarme 8, 10 auch eine andere Position einnehmen können, als in Fig. 1 und 2 dargestellt ist. Z. B. können die Tragarme 8, 10 eine waagerechte Position einnehmen, wie dies bei einer Vorbereitung einer Klebespitze erforderlich ist oder sie können auch eine dazwischenliegende Position einnehmen, z. B. zur Aufnahme einer Vorratsrolle 19 von einer die Vorratsrolle 19 fördernden Einrichtung. In Fig. 3 ist eine entsprechende Auswerteschaltung gezeigt. Die Dehnungsmeßstreifen 24 bis 27 sowie 61 bis 64 entsprechen gleichzeitig den Widerständen 24 bis 27 sowie 61 bis 64 in einer bekannten Wheatstone'schen Brückenschaltung mit Nachverstärkung. Die Ausgänge der Brückenschaltung sind einerseits über einen RC - Abgleich 29, einen Verstärker 31, einen Bandpaß 32, bzw. andererseits einen Frequenzgenerator 33, einen 90°-Phasenschieber 34 und einen Sinus - Rechteckwandler 36 mit einem phasenrichtigen Demodulator 37, und über einen Tiefpaß 38 mit einem Rechner 39 verbunden. Daraus resultiert ein Signal 40. Die vorgenannten Elemente 29 bis 38 können in einem gesonderten Gehäuse untergebracht sein und sind untereinander sowie mit den Dehnungsmeßstreifen 24 bis 27 sowie 61 bis 64 durch nicht näher dargestellte elektrische Leitungen verbunden. Der Rechner 39 kann im Maschinenleitstand oder an einer anderen zentralen Stelle angeordnet sein. Dem Rechner 39 ist eine Tastatur 41 zugeordnet, über welche dem Rechner 39 die Grammatur bzw. das spezifische Gewicht 42 der Warenbahn 18 sowie die Breite 43 der Warenbahn 18 eingegeben wird. Weiterhin können dem Rechner 39 über einen Umschalter 44 auch wahlweise solche durch einen Pfeil symbolisiertes Signal 58 zugeführt werden, das aus einer Wägung einer nichtdargestellten, an den in Fig. 1 angedeuteten Tragarmen 7, 8 befindlichen zweiten Vorratsrolle resultiert. Die dafür erforderlichen technischen Mittel entsprechen denen, mit welchen die anderen, dem Rechner 39 über den Umschalter 44 zugeführten Meßwerte 40 ermittelt worden sind. Der Umschalter 44 ist durch eine über die Tastatur 41 zu betätigende Stelleinrichtung 46, z. B. mittels Magnetkraft, betätigbar. Die Anordnung arbeitet wie folgt: Die in Fig. 3 gezeigte Brückenschaltung wird an Spannung gelegt. Durch Deformation der Dehnungsmeßstreifen entsprechend der jeweiligen Drehwinkelstellung der Tragarme 8, 10 wird zwischen den Dehnungsmeßstreifen eine Differenzspannung gemessen, verstärkt und ausgewertet, welche unter Berücksichtigung der Winkelstellung der Tragarme 8, 10 eine Berechnung des derzeitigen Gewichtes einer Vorratsrolle 19 ermöglicht. Dabei sind die Tragarme 8, 10 sowie ebenso die Tragarme 7, 9 entsprechend ihrer Drehwinkelstellung geeicht. Das Gewicht einer die Warenbahnen 18 aufnehmenden Hülse 17 ist ebenfalls bekannt. Nach Eingabe der Breite 43 sowie des spezifischen Gewichtes 42 bzw. Grammatur der Warenbahn 18 in den Rechner 39 ist die durchschnittliche Länge einer Warenbahn 18 auf einer Vorratsrolle 19 oder einer Restrolle ermittelbar (indirekte Messung der Lagerkraft P über die Dehnungsmeßstreifen der Tragarme).
Dabei werden Lagerkräfte P der auf den Rollenträgern (4, 6) aufgeachsten Vorratsrolle 19 in statischen Zustand der Vorratsrolle 19 gemessen Das entsprechende Signal 40, 58 erzeugt zusammen mit den Signalen aus der Eingabe der Breite 43 sowie des spezifischen Gewichtes 42 der Materialbahn 18 sowie der Angaben des Drehwinkelgebers 28 einen Wert über die Länge der auf der Vorratsrolle 19 befindlichen Materialbahn 18.

Bei einem Ausführungsbeispiel einer erfindungsgemäßen Anordnung in einem Tragarm 10 ist eine Längsschnittdarstellung eines Tragarmes 10 dargestellt (Fig. 4). Am Ende 13 des Tragarmes 10 befindet sich eine Welle 47, die an ihrem ersten Ende einen Spannkonus 16 trägt zur Aufnahme des einen Endes der Hülse 17 einer Vorratsrolle 19. Die Welle 47 ist koaxial von einer Gleitbuchse 48 umgeben und ist gegen die Gleitbuchse 48 an ihrem ersten Ende über ein bekanntes Kraftmeßlager 49 und an ihrem zweiten Ende über ein Kugellager 51 abgestützt und ist somit drehbar in dieser Gleitbuchse 48 gelagert. Das Kraftmeßlager 49, in welchem die Welle 47 gelagert ist, besteht aus zwei nicht näher dargestellten Ringen, nämlich einem inneren Ring, der das Wälzlager aufnimmt, und einem äußeren Ring, der an der Gleitbuchse 48 befestigt ist. Innerer und äußerer Ring sind durch einen Steg miteinander verbunden. Dieser Steg ist das eigentliche Meßglied. Wird das Kraftmeßlager 49 durch eine Lagerkraft P belastet, so wird der Steg entsprechend seiner Drehwinkelstellung z. B. auf Biegung beansprucht. Die Biegungen führen zu Dehnungen und Stauchungen an den Flanken des Steges. Die Dehnungen und Stauchungen sind der genannten Kraft proportional und werden zur Messung der Lagerkraft P benutzt. Die Messung erfolgt mit jeweils vier Dehnungsmeßstreifen analog den Dehnungsmeßstreifen 24 bis 27, die beidseitig auf den Flanken des genannten Steges eines Kraftmeßlagers 49 aufgebracht sind (direkte Messung der Lagerkraft P). In einem zweiten, nichtdargestellten Kraftmeßlager 50 sind ebenfalls vier Dehnungsmeßstreifen, analog den Dehnungsmeßstreifen 61 bis 64 eingesetzt. Das zweite Ende der Welle 47 ist Kraft- und formschlüssig mit einer tragarmfesten Bremse 21 verbunden. Die Gleitbuchse 48 ist in Richtung der Rotationsachse 22 der nichtdargestellten Vorratsrolle 19 verschiebbar und wird dabei im Tragarm 10 an der bremsnahen Seite von einem Flansch 52 und an der spannkonusnahen Seite ebenfalls von einem Flansch 53 getragen, wobei die Flansche 52, 53 kraft- und formschlüssig mit dem Tragarm 10 an dessen Ende 13 verbunden sind. Zwischen der Gleitbuchse 48 und den die Gleitbuchse 48 beidseitig tragenden und mit einer kreisrunden Öffnung versehenen Flanschen 52, 53 ist im Bereich der Flanschen 52, 53 jeweils ein Gleitlager 59 angeordnet. Der Tragarm 8 weist ebenso eine Lagerung auf, wie in Fig. 4 dargestellt. Eine entsprechende Auswerteschaltung gleicht derjenigen nach Fig. 3.

Eine mögliche Unwucht einer auf die Spannkonen 14, 16 der Rollenträger 4, 6 aufgeachsten Vorratsrolle 19 kann durch die Messung der Lagerkräfte P im dynamischen Zustand beim Drehbewegen der Vorratsrolle 19 mittels der von den Meßwertaufnehmern 24 bis 27 und 61 bis 64 ermittelten Meßwerte festgestellt werden. Dabei werden die Meßwerte durch die bekannte Auswerteschaltung in proportionale elektrische Signale 40, 58 umgewandelt und dem Rechner 39 zugeführt. Dem Rechner 39 ist mittels der Tastatur 41 ein Grenzwert 45 für die Zentrifugalkraft P eingegeben worden, bei dessen Überschreitung ein Signal 54 erzeugt wird, welches selbsttätig zum Reduzieren der Drehzahl der Vorratsrolle 19 oder zum Abschalten der Maschine führen kann. Das Signal 54 kann auch als optisches oder akustisches Signal ausgebildet sein.

Es ist weiterhin möglich, Dehnungsmeßstreifen 66, 67; 68, 69 auf den vorratsrollennahen Seitenflächen 71; 72 der Tragarme 8; 10 anzuordnen sowie auch Dehnungsmeßstreifen 76, 77; 78, 79 auf den vorratsrollenfernen Seitenflächen 73; 74 der Tragarme 8; 10 anzuordnen. In analoger weise sind nichtdargestellte Dehnungsmeßstreifen auf den nichtdargestellten Tragarmen 7, 9 aufgebracht. Diese Dehnungsmeßstreifen 66 bis 69 sowie 76 bis 79 haben die gleiche Funktion wie die bereits vorher erwähnten Dehnungsmeßstreifen 24 bis 27 und 61 bis 64, die alternativ auf den rechten und linken Seitenflächen 56, 57 der Tragarme 7 bis 10 angeordnet sind.

### Teileliste

- 1: Seitengestell
- 2: Seitengestell
- 3: Tragspindel
- 4: Tragarmlagerteil
- 5: -
- 6: Tragarmlagerteil
- 7: Tragarm (4)
- 8: Tragarm (4)
- 9: Tragarm (6)
- 10: Tragarm (6)
- 11: -
- 12: Ende (8)
- 13: Ende (10)
- 14: Spannkonus (8)
- 15: -
- 16: Spannkonus (10)
- 17: Hülse
- 18: Warenbahn
- 19: Vorratsrolle
- 20: -
- 21: Bremse
- 22: Rotationsachse (19)
- 23: -
- 24: Dehnungsmeßstreifen (8)
- 25: Dehnungsmeßstreifen (8)
- 26: Dehnungsmeßstreifen (8)
- 27: Dehnungsmeßstreifen (8)
- 28: Drehwinkelgeber
- 29: RC - Abgleich
- 30: -
- 31: Verstärker
- 32: Bandpaß
- 33: Frequenzgenerator
- 34: 90°-Phasenschieber
- 35: -
- 36: Sinus-Rechteckwandler
- 37: Demodulator
- 38: Tiefpaß
- 39: Rechner
- 40: Signal
- 41: Tastatur
- 42: Gewicht, spezifisches (18)
- 43: Breite (18)
- 44: Umschalter (28)
- 45: Grenzwert Zentrifugalkraft
- 46: Stelleinrichtung (44)
- 47: Welle (8)
- 48: Gleitbuchse (8)
- 49: Kraftmeßlager (48)
- 50: Kraftmeßlager
- 51: Kugellager (48)
- 52: Flansch
- 53: Flansch
- 54: Signal
- 55: -
- 56: Seitenfläche, rechte (8, 10; 7, 9)
- 57: Seitenfläche, linke (8, 10; 7, 9)
- 58: Signal
- 59: Gleitlager
- 60: -
- 61: Dehnungsmeßstreifen (10)
- 62: Dehnungsmeßstreifen (10)
- 63: Dehnungsmeßstreifen (10)
- 64: Dehnungsmeßstreifen (10)
- 65: -
- 66: Dehnungsmeßstreifen (8)
- 67: Dehnungsmeßstreifen (8)
- 68: Dehnungsmeßstreifen (10)
- 69: Dehnungsmeßstreifen (10)
- 70: -
- 71: Seitenfläche, vorratsrollennah (8)
- 72: Seitenfläche, vorratsrollennah (10)
- 73: Seitenfläche, vorratsrollenfern (8)
- 74: Seitenfläche, vorratsrollenfern (10)
- 75: -
- 76: Dehnungsmeßstreifen (8)
- 77: Dehnungsmeßstreifen (8)
- 78: Dehnungsmeßstreifen (10)
- 79: Dehnungsmeßstreifen (10)

- P: Lagerkraft, Gewicht

## Patentansprüche

1. Verfahren zur Bestimmung einer Länge einer Materialbahn einer in Tragarmen (7, 9; 8, 10) eines Rollenträgers (46) aufgeachsten Vorratsrolle (19), wobei die Lagerkräfte (P) der Tragarme (7, 9; 8, 10) infolge der auf den Tragarmen (7, 9; 8, 10) aufgeachsten Vorratsrolle (19) ermittelt werden, indem die zugehörigen, von Meßwertaufnehmern (49, 50) ermittelten, elektrischen Signale (40, 58) einem Rechner (39) zugeführt werden und der Rechner (39) nach Zufuhr der Breite (43) und des spezifischen Gewichtes (42) der Materialbahn die Länge der Materialbahn ermittelt.

2. Verfahren zur Messung von immanenten Kräften einer in Tragarmen (7, 9; 8, 10) eines Rollenträgers (46) aufgeachsten Vorratsrolle, wobei die Lagerkräfte (P) der Tragarme (7, 9; 8, 10) infolge der auf den Tragarmen (7, 9; 8, 10) aufgeachsten Vorratsrolle im dynamischen Zustand beim Drehbewegen der Vorratsrolle ermittelt werden, indem die zugehörigen, von Meßwertaufnehmern (49, 50) ermittelten elektrischen Signale (40, 58) einem Rechner (39) zugeführt werden und beim überschreiten eines voreingestellten Wertes einer Zentrifugalkraft ein Signal (54) abgegeben wird.

3. Verfahren nach Anspruch 1 oder 2, **dadurch gekennzeichnet, daß** die Meßwertaufnehmer (49; 50) als Kraftmeßlager (49; 50) ausgebildet werden.

4. Verfahren nach Anspruch 3, **dadurch gekennzeichnet, daß** die Kraftmeßlager (49; 50) unmittelbar an den die Vorratsrolle (19) beidseitig aufnehmenden Spannkonen (14, 16) angeordnet werden.

## Claims

1. Method of determining a length of a web of a supply reel (19) axially mounted in supporting arms (7, 9; 8, 10) of a reel carrier (4, 6), the bearing forces (P) of the supporting arms (7, 9; 8, 10) as a result of the supply reel (19) axially mounted on the supporting arms (7, 9; 8, 10) being determined by virtue of the fact that the associated electrical signals (40, 58) determined by measuring sensors (49, 50) are fed to a computer (39), and the computer (39), after the width (43) and the specific weight (42) of the web have been fed, determines the length of the web.

2. Method of measuring inherent forces of a supply reel axially mounted in supporting arms (7, 9; 8, 10) of a reel carrier (4, 6), the bearing forces (P) of the supporting arms (7, 9; 8, 10) as a result of the supply reel axially mounted on the supporting arms (7, 9; 8, 10) being determined in the dynamic state during the rotary movement of the supply reel by virtue of the fact that the associated electrical signals (40, 58) determined by measuring sensors (49, 50) are fed to a computer (39), and a signal (54) is transmitted if a preset value of a centrifugal force is exceeded.

3. Method according to Claim 1 or 2, **characterized in that** the measuring sensors are designed as force-sensing bearings (49, 50).

4. Method according to Claim 3, **characterized in that** the force-sensing bearings (49; 50) are arranged directly on the clamping cones (14, 16) which receive the supply reel (19) at both sides.

## Revendications

1. Procédé de détermination de la longueur d'une bande de matériau d'un rouleau de stockage (19) monté sur axe dans des bras supports (7, 9; 8, 10) d'un support de rouleau (46) les efforts aux paliers (P) des bras supports (7, 9; 8, 10) étant déterminés par suite du montage sur axe, sur les bras supports (7, 9; 8, 10), du rouleau de stockage (19), par le fait que les signaux électriques (40, 58) afférents, déterminés par des capteurs de mesure (49, 50), sont amenés à un calculateur (39) et le calculateur (39), après avoir indiqué la largeur (43) et le poids spécifique (42) de la bande de matériau, déterminant la longueur de cette bande de matériau.

2. Procédé de mesure des efforts immanents d'un rouleau de stockage monté sur axe dans des bras supports (7, 9; 8, 10) d'un support de rouleau (46), les efforts aux paliers (P) des bras support (7, 9; 8, 10) étant déterminé lors du mouvement de rotation du rouleau de stockage, à l'état dynamique, par suite du montage sur axe du rouleau de réserve sur le bras support (7, 9; 8, 10), par le fait que les signaux électriques (40, 58) afférents, déterminés par des capteurs de valeurs de mesure (49, 50), sont amenés à un calculateur (39) et un signal (54) étant produit, en cas de dépassement d'une valeur préréglée d'une force centrifuge.

3. Procédé selon la revendication 1 ou 2, **caractérisé en ce que** les capteurs de valeur de mesure (49; 50) sont réalisés sous la forme de paliers instrumentalisés pour la mesure de force (49; 50).

4. Procédé selon la revendication 3, **caractérisé en ce que** les paliers instrumentalisés pour la mesure des forces (49; 50) sont disposés directement sur les cônes de serrage (14, 16) qui supportent des deux côtés le rouleau de stockage (19).
